# EUROPÄISCHE PATENTANMELDUNG

(11) **EP 2 423 366 A2**
(43) Veröffentlichungstag der Anmeldung: **29.02.2012**
(21) Anmeldenummer: 11177349.5
(22) Anmeldetag: 12.08.2011
(51) Int. Cl.: D06F 33/02, D06F 39/00, A47L 15/42, A47L 15/00

(54) **Haushaltsgerät**

(30) Priorität: 26.08.2010 DE 102010039834
(71) Anmelder: BSH Bosch und Siemens Hausgeräte GmbH, 81739 München (DE)
(72) Erfinder: Rosenbauer, Michael Georg, 86756 Reimlingen (DE)

(57) **Zusammenfassung**

Die Erfindung betrifft ein Haushaltsgerät, insbesondere wasserführendes Haushaltsgerät, das an ein Stromversorgungsnetz eines Energieversorgers anschließbar ist, und das mit einer Kommunikations- und/oder Steuereinrichtung (1) ausgestattet ist. Erfindungsgemäß ist zum Austausch und/oder zur Abfrage von Informationen, insbesondere Netzstrominformationen über Stromtarife des Energieversorgers, die Kommunikations- und/oder Steuereinrichtung (1) in einer bidirektionalen Signalverbindung (8) mit dem Energieversorger bringbar.

## Beschreibung

Die Erfindung betrifft ein Haushaltsgerät, insbesondere wasserführendes Haushaltsgerät, das an ein Stromversorgungsnetz eines Energieversorgers anschließbar ist, und das mit einer Kommunikations- und/oder Steuereinrichtung ausgestattet ist.

Energieversorgungsunternehmen können in ihren Energieversorgungsnetzen unterschiedliche Stromtarife anbieten. Diese unterscheiden sich unter anderem im Strompreis, im Bereitstellungszeitraum sowie in Hinblick auf die Art und Weise der Stromerzeugung. Ein Standardtarif ist beispielsweise der an sich bekannte Nachtstromtarif, bei dem sich zu den Nachtstunden der Strompreis vergünstigt.

Hierzu geben Stromversorger über das Stromversorgungsnetz Rundsteuersignale aus, die zum Beispiel Informationen über den Start- und den Endzeitpunkt des Nachtstromtarifs enthalten. Auf der Grundlage solcher Rundsteuersignale können Haushaltsgeräte automatisch aktiviert werden und so den günstigeren Nachtstromtarif nutzen.

Die Aufgabe der Erfindung besteht darin, ein Haushaltsgerät, insbesondere ein wasserführendes Haushaltsgerät bereitzustellen, mit dem Verbrauchskosten des Haushaltsgerätes weiter optimierbar sind.

Gemäß dem kennzeichnenden Teil des Patentanspruches 1 ist die Kommunikations- und/oder Steuereinrichtung in einer bidirektionalen Signalverbindung mit dem Energieversorger bringbar. Dadurch können in beide Signalrichtungen zwischen der Kommunikations- und/oder Steuereinrichtung des Haushaltsgerätes und dem Energieversorgerinformationen ausgetauscht und/oder abgefragt werden. Derartige Informationen sind insbesondere Netzstrominformationen etwa über Stromtarife des Energieversorgers oder dergleichen. Es können daher nicht nur Tarifinformationen einseitig vom Energieversorger zum Haushaltsgerät übermittelt werden, sondern kann das Steuergerät des Haushaltsgerätes zusätzlich Informationen vom Energieversorger abfragen, zum Beispiel den Zeitraum spezieller Tarife, etwa dem Nachtstromtarif, und/oder die Startzeit spezieller Tarife, oder alternative Stromtarife. Auf der Grundlage dieser Informationen kann die Kommunikations- und/oder Steuereinrichtung des Haushaltsgerätes eine Startzeit und/oder eine Spülprogrammart bestimmen. Dabei kann die Kommunikations- und/oder Steuereinrichtung ein im Inneren des Hauhaltsgeräts angeordnetes Bauteil sein. Es ist aber auch möglich, insbesondere wenn die Kommunikations- und/oder Steuereinrichtung als zwei voneinander getrennte Bauteile ausgebildet sind, die Kommunikationseinrichtung außerhalb des Haushaltsgeräts anzuordnen, z. B. in einem Aufnahmeschacht mit entsprechenden elektrischen Anschlussmöglichkeiten, während die Steuereinrichtung, die insbesondere der Ansteuerung von Gerätekomponenten des Haushaltsgeräts dient, im Inneren des Haushaltsgeräts angeordnet ist.

Beispielhaft kann eine von der Kommunikations- und/oder Steuereinrichtung durchgeführte Programmauswahl auf der Grundlage der Tarifinformationen vom Energieversorger derart erfolgen, dass insbesondere bei Bereitstellung des Nachtstromtarifes ein energieintensives Spülprogramm oder ein Spülprogramm mit langer Programmzeitdauer festgelegt wird. Alternativ dazu kann die Kommunikations- und/oder Steuereinrichtung auf der Grundlage der angebotenen Stromtarifinformationen unterschiedliche Startzeiten und/oder unterschiedliche Spülprogrammarten anzeigen, von denen der Benutzer eine Startzeit und/oder Spülprogrammart auswählen kann.

Die bidirektionale Signalverbindung kann insbesondere drahtlos oder über Stromversorgungsleitungen erfolgen.

Für eine einfache Handhabung kann die elektronische Kommunikations- und/oder Steuereinrichtung des Haushaltsgerätes eine Stromtarif-Wähleinrichtung aufweisen. Mit dieser Wähleinrichtung kann benutzerseitig aus den vom Energieversorger angebotenen Stromtarifen ein Stromtarif ausgewählt werden und mittels der Kommunikations- und/oder Steuereinrichtung ein Haushaltsgeräte-Betrieb in Abhängigkeit von dem ausgewählten Stromtarif angepasst werden.

Der Gerätebetrieb kann dabei sowohl zeitlich als auch mit Bezug auf weitere Prozessparameter dem ausgewählten Stromtarif angepasst werden. Vorrangiges Ziel kann dabei sein, die Verbrauchskosten des Haushaltsgerätes zu reduzieren. Alternativ und/oder zusätzlich kann in bedienerfreundlicher Weise nach Kundenwunsch ein spezieller Stromtarif ausgewählt werden, der beliebige benutzerseitige Kriterien erfüllen kann, etwa ein Stromtarif, in dessen Bereitstellungszeitraum ausschließlich Strom aus regenerierbaren Energiequellen angeboten wird.

Die mit der Stromtarif-Wähleinrichtung getroffene Wahl des Stromtarifes kann dabei für jeden Betriebszyklus des Haushaltsgerätes von neuem getroffen werden. Alternativ kann mittels der Wähleinrichtung dauerhaft ein benutzerseitig ausgewählter Stromtarif fest voreingestellt werden.

Wie oben erwähnt, kann die Kommunikations- und/oder Steuereinrichtung den Haushaltsgeräte-Betrieb zeitlich an den jeweils ausgewählten Stromtarif anpassen. Hierzu kann die Kommunikations- und/oder Steuereinrichtung in Abhängigkeit vom ausgewählten Stromtarif entweder die Betriebsdauer verlängern oder reduzieren, um beispielsweise Energiekosten innerhalb des Bereitstellungszeitraumes des ausgewählten Stromtarifs zu senken.

Alternativ kann mittels der Kommunikations- und/oder Steuereinrichtung ein Betriebsstart bis zu einem Zeitpunkt verzögert werden, in dem die Stromversorgung bei ausgewähltem Stromtarif erfolgt. In diesem Fall erfolgt somit eine Freigabe des Gerätebetriebes vollautomatisch, das heißt es ist kein Zeitintervall vom Benutzer vorzugeben, das manuell in eine Zeitschaltuhr eingegeben werden müsste.

Die Kommunikations- und/oder Steuereinrichtung kann ein Zeitglied aufweisen, mit dem der Betriebsstart um eine von der Kommunikations- und/oder Steuereinrichtung vorgegebene Verzögerungszeitdauer verzögert wird. Nach Ablauf der Verzögerungszeitdauer wird somit der Gerätebetrieb automatisch im Bereitstellungszeitraum des ausgewählten Stromtarifes gestartet.

Die Stromtarif-Wähleinrichtung kann eine Anzeigeeinheit aufweisen, mit der Stromtarifinformationen vom Energieversorger angezeigt werden können, wodurch der Benutzer einen einfachen Überblick über das Stromtarif-Angebot erhalten kann. Die Stromtarifinformationen können zum Beispiel den Bereitstellungzeitraum, in dem der jeweilige Stromtarif angeboten wird, die Art der Stromgewinnung in diesem Zeitraum sowie den Strompreis anzeigen.

Die Stromtarifinformationen können manuell vom Benutzer in der Stromtarif-Wähleinrichtung hinterlegt werden. In diesem Fall sind die Stromtarifinformationen jeweils vom Benutzer zu aktualisieren beziehungsweise richtig in das Haushaltsgerät einzugeben. Alternativ dazu kann die Stromtarif-Wähleinrichtung die Stromtarifinformationen über Datenleitungen erhalten. Besonders bevorzugt ist es, wenn die Stromtarifinformationen über Rundsteuersignale unmittelbar aus dem Stromversorgungsnetz des Energieversorgers in die Stromtarif-Wähleinrichtung des Haushaltsgerätes übertragen werden können.

Hierzu können unter anderem auch Rundsteueranlagen des Energieversorgers genutzt werden, um die Stromtarifinformationen zum Haushaltsgerät zu übertragen. Dazu kann dem Haushaltsgerät ein Rundsteuersignalempfänger zugeordnet sein, mit dem die Rundsteuersignale vom Stromversorgungsnetz zur Stromtarif-Wähleinrichtung übertragen werden können. Auf diese Weise werden die Stromtarifinformationen in der Stromtarif-Wähleinrichtung des Haushaltsgerätes stets aktualisiert, ohne dass hierzu der Benutzer aktiv werden müsste. Zusätzlich kann dem Haushaltsgerät ein Signalsender zugeordnet sein, über den die Kommunikations- und/oder Steuereinrichtung des Haushaltsgerätes Tarifinformationen des Energieversorgers abfragen kann.

Der Rundsteuersignalempfänger kann zum Beispiel als ein Zwischenadapter außenseitig am Haushaltsgerät angebracht werden. Der Zwischenadapter kann dabei unmittelbar in die Netzanschlussleitung des Haushaltsgerätes eingekoppelt sein.

Für eine weitere Anpassung des Gerätebetriebes an Kundenwünsche kann mittels der Stromtarif-Wähleinrichtung jedem der angebotenen Stromtarife zumindest zwei unterschiedliche Betriebsarten zugeordnet sein. In diesem Fall kann in einem ersten Schritt benutzerseitig der Stromtarif ausgewählt werden. In einem zweiten Schritt kann dann der Benutzer eine geeignete Betriebsart auswählen, um den Gerätebetrieb an den ausgewählten Stromtarif anzupassen.

Nachfolgend ist ein Ausführungsbeispiel der Erfindung anhand der beigefügten Figuren beschrieben.

Es zeigen:
- Fig. 1: in einer Prinzipdarstellung einen stark vereinfachten Stromlaufplan einer Geschirrspülmaschine;
- Fig. 2: ausschnittsweise eine Bedienblende der Geschirrspülmaschine, und
- Fig. 3: in einem Zeitdiagramm unterschiedliche vom Energieversorger angebotene Stromtarife.

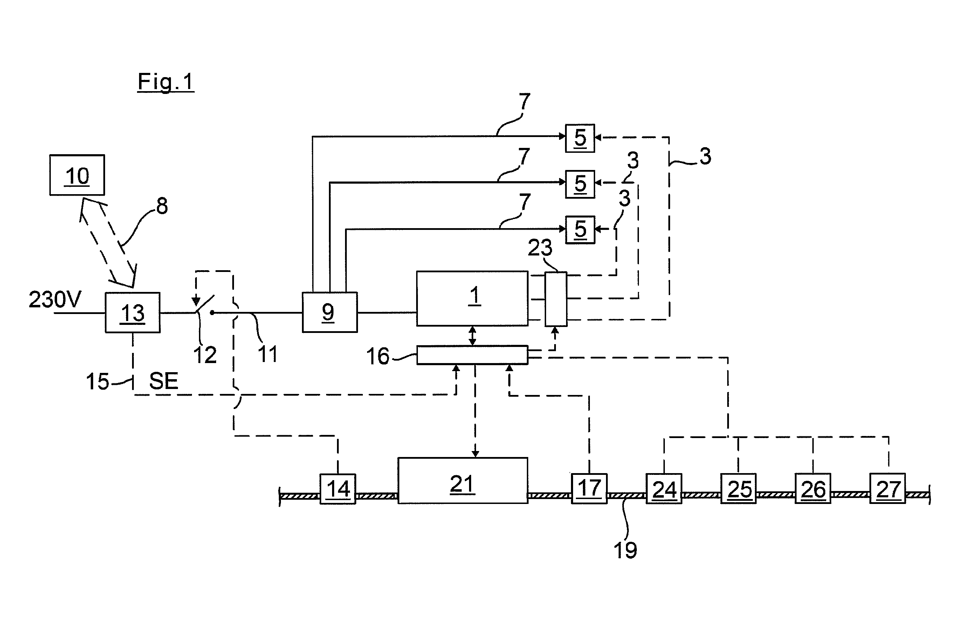

Wie aus der Fig. 1 hervorgeht, weist das im vorliegenden Ausführungsbeispiel als Geschirrspülmaschine ausgebildete Haushaltsgerät eine elektronische Kommunikations- und/oder Steuereinrichtung 1 auf, die über gestrichelt angedeutete Signalleitungen 3 unterschiedliche Gerätekomponenten 5 ansteuert. Dies können unter anderem eine Umwälzpumpe, eine Wasserheizung oder ein Flüssigkeitsventil sein. Die Gerätekomponenten 5 sowie die Kommunikations- und/oder Steuereinrichtung 1 werden über Versorgungsleitungen 7 von einem Netzteil 9 mit Niederspannung versorgt. Alternativ dazu können die Gerätekomponenten 5 unmittelbar mit Netzspannung versorgt sein. Das Netzteil 9 ist wiederum über eine Netzanschlussleitung 11 mit dem Stromversorgungsnetz in Verbindung.

Wie aus der Fig. 1 weiter hervorgeht, ist dem Netzteil 9 in Reihe ein Hauptschalter 12 sowie ein Signalempfänger/Sender 13 vorgeschaltet. Der Hauptschalter 12 ist mittels eines Tasters 14 betätigbar. Der Signalempfänger/Sender 13 ist in bidirektionaler Signalverbindung 8 mit einem Energieversorger (nicht dargestellt), wodurch in beide Richtungen Netzstrominformationen zwischen der Kommunikations- und/oder Steuereinrichtung 1 und dem Energieversorger ausgetauscht werden können. Beispielhaft kann der Signalempfänger 13 ein vom Energieversorger kommendes Steuersignal S_{E} ableiten, das über die Signalverbindung 15 zu einer später beschriebenen Stromtarif-Wähleinrichtung 16 geleitet wird. Mittels der bidirektionalen Signalverbindung 8 können Stromtarifinformationen von dem Energieversorgungsunternehmen zum Stromtarif-Wähleinrichtung 16 übertragen werden. Darüber hinaus kann in umgekehrter Richtung die Kommunikations- und/oder Steuereinrichtung 1 über die bidirektionale Signalverbindung 8 Stromtarife des Energieversorgers abfragen.

Mittels der Stromtarif-Wähleinrichtung 16 kann ein Benutzer aus den vom Energieversorger angebotenen Stromtarifen einen Stromtarif auswählen. Jedem Stromtarif ist üblicherweise der Strompreis, ein Bereitstellungszeitraum sowie zusätzlich auch die Art der Stromgewinnung zugeordnet.

Für eine bedienfreundliche Auswahl des jeweiligen Stromtarifes weist die Stromtarif-Wähleinrichtung 16 einen Wählknebel 17 auf, der zusammen mit dem Taster 14 in einer Bedienblende 19 angeordnet ist. Die vom Energieversorger angebotenen Stromtarife können in einer Anzeigeeinheit 21 der Stromtarif-Wähleinrichtung 16 aufgelistet sein, die ebenfalls in der Bedienblende 19 angeordnet ist. Durch Betätigung des Bedienknebels 17 kann der Benutzer einen der in der Anzeigeeinheit 21 aufgelisteten Stromtarife auswählen.

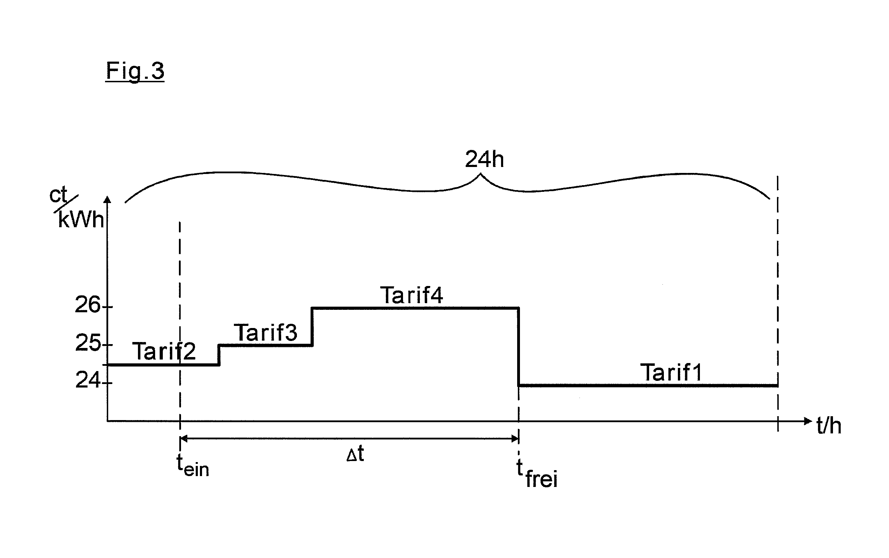

Wie aus der Fig. 1 weiter hervorgeht, ist die Wähleinrichtung 16 in Signalverbindung mit der Kommunikations- und/oder Steuereinrichtung 1 sowie mit einem Zeitglied 23, das in die zu den Gerätekomponenten 5 führenden Signalleitungen 3 geschaltet ist. Mit Hilfe des Zeitglieds 23 kann ein Betriebsstart um eine von der Kommunikations- und/oder Steuereinrichtung 1 vorgebbare Verzögerungszeitdauer Δt verzögert werden, wie sie im Diagramm der Fig. 3 angedeutet ist. Nach Ablauf dieser Verzögerungszeitdauer Δt schließt das Zeitglied 23 die Signalleitungen zu den Gerätekomponenten 5, wodurch der Betriebsstart freigeben wird und somit der Gerätebetrieb starten kann. Die Verzögerungszeitdauer Δt wird von der Kommunikations- und/oder Steuereinrichtung 1 automatisch derart eingestellt, dass der Betriebsstart zu einem Zeitpunkt erfolgt, in welchem der vom Benutzer ausgewählte Stromtarif gilt.

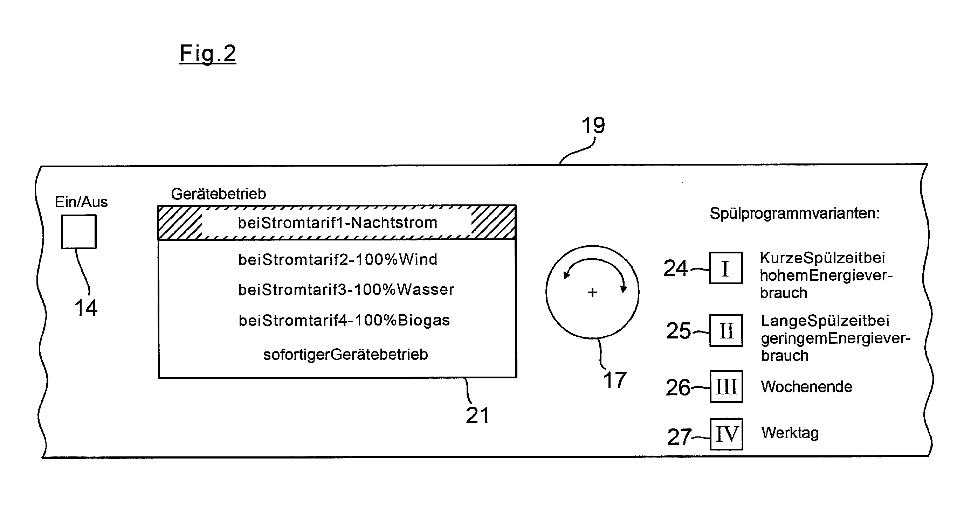

In der Fig. 2 ist die Bedienblende 19 in einer Vorderansicht ausschnittsweise dargestellt. Demzufolge trägt die Bedienblende den Taster 14, die Anzeigeeinheit 21 sowie den Wählknebel 17. Dieser kann durch Drehbetätigung einen der in der Anzeigeeinheit 21 aufgelisteten Stromtarife 1 bis 4 auswählen. Gegebenenfalls kann auch ein sofortiger Gerätebetrieb ausgewählt werden.

Auf der in der Fig. 2 linken Seite der Bedienblende 19 sind weitere Wahltasten 24 bis 28 vorgesehen, bei deren Betätigung unterschiedliche Spülprogrammvarianten einstellbar sind. So kann mit der Taste "I" eine kurze Spülzeit bei hohem Energieverbrauch gewählt werden, mit der Taste "II" eine lange Spülzeit bei geringem Energieverbrauch sowie mit den Tasten "III" und "IV" ein spezieller Wochenend-Gerätebetrieb oder ein Werktag-Gerätebetrieb. Die mit den Tasten 24 bis 28 angebotenen Spülprogrammvarianten können den jeweiligen Stromtarifen 1 bis 4 speziell angepasst sein.

Zur Durchführung eines Spülprogramms wird zunächst der Taster 14 gedrückt, wodurch der in der Versorgungsleitung 11 geschaltete Hauptschalter 12 geschlossen wird. Dadurch liegt an den Gerätekomponenten 5 sowie an der Kommunikations- und/oder Steuereinrichtung 1 Versorgungsspannung an. Anschließend wird über den Wählknebel 17 einer der Stromtarife 1 bis 4 aus der Stromtarif-Liste der Anzeigeeinheit 21 oder aber ein sofortiger Gerätebetrieb ausgewählt.

In der Fig. 2 ist beispielhaft mittels des Wählknebels 17 der Stromtarif 1, also der Nachtstromtarif, ausgewählt. Dies ist in der Fig. 2 durch Hinterlegung der Textzeile "bei Stromtarif 1 - Nachtstrom" mit einem schraffierten Balken angedeutet. Demgegenüber bietet der Energieversorger unter dem Stromtarif 2 100%igen Strom aus Windkraft, unter dem Stromtarif 3 100%igen Strom aus Wasserkraft und unter dem Stromtarif 4 100%igen Strom aus Biogas an. Zusätzlich können in der Anzeigeeinheit 21 weitere Stromtarifinformationen, etwa Strompreis, Bereitstellungszeitraum oder dergleichen angezeigt werden.

In einem weiteren Wählschritt kann der Benutzer durch Betätigung einer der Tasten 24 bis 27 Spülprogrammvarianten auswählen, die mit dem bereits vorab festgelegten Stromtarif 1 verknüpft werden.

In der Fig. 3 sind die Stromtarife 1 bis 4 beispielhaft in einem Zeitdiagramm mit jeweils zugeordneten Strompreisen gezeigt. Demzufolge werden die Kilowattstunden innerhalb der verschiedenen Tarife 1 bis 4 zu unterschiedlichen Strompreisen angeboten, die in einem Bereich zwischen 24 bis 26 ct variieren. Das in der Fig. 3 gezeigte Zeitdiagramm erstreckt sich beispielhaft über 24 Stunden, in denen die Stromtarife 1 bis 4 hintereinander geschaltet sind. Alternativ dazu können sich die Stromtarife einander zeitlich überlappen oder können deren Bereitstellungszeiträume wandern.

Gemäß der Fig. 3 wird zu einem Zeitpunkt tₑᵢₙ der Taster 14 gedrückt und anschließend mit dem Wahlknebel 17 der Nachtstromtarif eingestellt. Aus diesen Vorgaben berechnet die Kommunikations- und/oder Steuereinrichtung 1 die Verzögerungszeitdauer Δt bis zu dem Zeitpunkt t_{frei}, zu dem der Nachstromtarif 1 gilt. Der Betriebsstart der Geschirrspülmaschine wird somit um die Verzögerungszeitdauer Δt bis in die Nachtstunden automatisch verzögert, ohne dass der Benutzer manuell die Verzögerung der Zeitdauer Δt einstellen müsste.

**BEZUGSZEICHENLISTE**
- 1: elektronische Kommunikations- und/oder Steuereinrichtung
- 3: Signalleitungen
- 5: Gerätekomponenten
- 7: Versorgungsleitungen
- 8: bidirektionale Signalverbindung
- 9: Netzteil
- 11: Netzanschlussleitung
- 12: Hauptschalter
- 13: Signalempfänger/-sender
- 15: Signalleitung
- 16: Stromtarif-Wähleinrichtung
- 17: Wählknebel
- 19: Bedienblende
- 14: Taster
- 21: Anzeigeeinheit
- 23: Zeitglied
- 24 bis 27: Wahltasten
- S_{E}: Steuersignal

## Patentansprüche

1. Haushaltsgerät, insbesondere wasserführendes Haushaltsgerät, das an ein Stromversorgungsnetz eines Energieversorgers anschließbar ist, und das mit einer Kommunikations- und/oder Steuereinrichtung (1) ausgestattet ist, **dadurch gekennzeichnet, dass** zum Austausch und/oder zur Abfrage von Informationen, insbesondere Netzstrominformationen über Stromtarife des Energieversorgers, die Kommunikations- und/oder Steuereinrichtung (1) in einer bidirektionalen Signalverbindung (8) mit dem Energieversorger bringbar ist.

2. Haushaltsgerät nach Anspruch 1, **dadurch gekennzeichnet, dass** von der Kommunikations- und/oder Steuereinrichtung (1) auf der Grundlage von, vom Energieversorger abgefragten Informationen eine Startzeit und/oder die Art des vom Haushaltsgerät durchzuführenden Spülprogramms festlegbar sind.

3. Haushaltsgerät nach Anspruch 1, **dadurch gekennzeichnet, dass** die Kommunikations- und/oder Steuereinrichtung (1) des Haushaltsgerätes auf der Grundlage von, vom Energieversorger abgefragten Informationen eine Reihe unterschiedlicher Startzeiten und/oder Spülprogrammarten erzeugen kann, von denen eine Startzeit und/oder eine Spülprogrammart vom Benutzer auswählbar ist.

4. Haushaltsgerät nach einem der vorhergehenden Ansprüche, **dadurch gekennzeichnet, dass** die Kommunikations- und/oder Steuereinrichtung (1) eine Stromtarif-Wähleinrichtung (16) aufweist, mit der benutzerseitig aus Stromtarifen des Energieversorgers (10) ein Stromtarif auswählbar ist, und insbesondere mittels der Kommunikations- und/oder Steuereinrichtung (1) ein Haushaltsgeräte-Betrieb in Abhängigkeit vom ausgewählten Stromtarif selbsttätig anpassbar ist.

5. Haushaltsgerät nach einem der vorhergehenden Ansprüche, **dadurch gekennzeichnet, dass** mittels der Kommunikations- und/oder Steuereinrichtung (1) ein Betriebsstart bis zu einem mit dem ausgewählten Stromtarif verknüpften Zeitpunkt (t_{frei}) verzögerbar ist.

6. Haushaltsgerät nach Anspruch 5, **dadurch gekennzeichnet, dass** der Kommunikations- und/oder Steuereinrichtung (1) ein Zeitglied (23) zugeordnet ist, mit dem der Betriebsstart um eine von der Kommunikations- und/oder Steuereinrichtung (1) vorgebbare Verzögerungszeitdauer (Δt) verzögerbar ist.

7. Haushaltsgerät nach einem der vorhergehenden Ansprüche, **dadurch gekennzeichnet, dass** dem Haushaltsgerät ein Signalempfänger und/oder Signalgeber (13) zugeordnet ist, mit dem Signale zwischen dem Energieversorger und der Kommunikations- und/oder Steuereinrichtung (1), insbesondere der Stromtarif-Wähleinrichtung (16), übertragbar sind.

8. Haushaltsgerät nach einem der vorhergehenden Ansprüche, **dadurch gekennzeichnet, dass** die Kommunikations- und/oder Steuereinrichtung (1) eine Anzeigeeinheit (21) zur Anzeige von durch den Energieversorger bereitgestellten Netzstrominformationen aufweist.

9. Haushaltsgerät nach einem der vorhergehenden Ansprüche, **dadurch gekennzeichnet, dass** als Netzstrominformationen der mit einem jeweiligen Stromtarif verknüpfte Zeitraum, die Art der Stromgewinnung und/oder der Strompreis anzeigbar sind.

10. Haushaltsgerät nach einem der vorhergehenden Ansprüche, **dadurch gekennzeichnet, dass** mittels der Kommunikations- und/oder Steuereinrichtung (1) jedem der Stromtarife zumindest zwei unterschiedliche Betriebsarten (I, II, III, IV) zuordenbar sind, die benutzerseitig auswählbar sind.
